# FASCICULE DE BREVET EUROPEEN

(11) **EP 3 853 443 B1**
(45) Date de publication et mention de la délivrance du brevet: **25.10.2023**
(21) Numéro de dépôt: 19790641.5
(22) Date de dépôt: 13.09.2019
(51) Int. Cl.: F01D 5/22, F01D 11/12

(54) **AUBE MOBILE POUR UNE ROUE D'UNE TURBOMACHINE D'AÉRONEF, ROUE MOBILE POUR UNE TURBOMACHINE D'AÉRONEF ET TURBOMACHINE D'AÉRONEF**
LAUFSCHAUFEL FÜR EINEN ROTOR EINER FLUGZEUGTURBOMASCHINE, ROTOR FÜR EINE FLUGZEUGTURBOMASCHINE UND FLUGZEUGTURBOMASCHINE
ROTOR BLADE FOR A ROTOR OF AN AIRCRAFT TURBOMACHINE, ROTOR FOR AN AIRCRAFT TURBOMACHINE AND AIRCRAFT TURBOMACHINE

(30) Priorité: 17.09.2018 FR 1858340
(43) Date de publication de la demande: 28.07.2021
(73) Titulaire: SAFRAN AIRCRAFT ENGINES, 75015 Paris (FR)
(72) Inventeur: DUPEYRE, Raphaël, Jean, Philippe, 77550 MOISSY-CRAMAYEL (FR); BASSERY, Josserand, Jacques, André, 77550 MOISSY-CRAMAYEL (FR); FANELLI, Jérémy, Jacques, Attilio, 77550 MOISSY-CRAMAYEL (FR); FRANCOIS, Etienne, Léon, 77550 MOISSY-CRAMAYEL (FR)
(74) Mandataire: Gevers & Orès
(86) Numéro de dépôt international: PCT/FR2019/052133
(87) Numéro de publication internationale: WO 2020/058612

(56) Documents cités:
- EP-A1- 2 746 537
- DE-A1-102010 017 489
- FR-A1- 2 955 142
- FR-A1- 2 970 999

## Description

### DOMAINE TECHNIQUE

La présente invention se rapporte au domaine général des aubes mobiles pour une roue d'une turbomachine d'aéronef, des roues mobiles pour une turbomachine d'aéronef, ainsi que des turbomachines d'aéronef.

### ÉTAT DE LA TECHNIQUE

Classiquement, une turbine axiale de turbomachine se compose d'une succession d'étages axiaux disposés les uns derrière les autres. Chaque étage comporte une roue mobile à aubes formant rotor et un distributeur aubagé formant stator. La roue mobile est mise en rotation en vis-à-vis du distributeur correspondant.

La roue mobile est classiquement constituée d'un disque annulaire centré sur l'axe de rotation Y de la roue, sur lequel sont fixées une pluralité d'aubes.

De manière traditionnelle, une aube mobile comprend une pale aérodynamique s'étendant suivant un axe d'empilement Z de l'aube. L'aube mobile comprend en outre un talon externe et un pied interne délimitant la pale suivant l'axe d'empilement Z.

Plus précisément, la pale est délimitée suivant l'axe d'empilement Z par une plateforme externe du talon et une plateforme interne du pied. La plateforme externe comprend au moins une léchette, par exemple deux, en saillie vers l'extérieur depuis la plateforme externe. Les léchettes sont destinées à coopérer par complémentarité de forme avec un bloc annulaire de matière abradable (par exemple une structure en nid d'abeille) fixé sur un carter externe entourant la roue mobile, pour former un joint d'étanchéité dynamique de type labyrinthe.

Les joints d'étanchéité de type labyrinthe ont pour but de limiter le passage de gaz entre la roue mobile et le bloc de matière abradable, et autrement dit de maximiser la quantité de gaz agissant sur les pales de la roue mobile, de manière à optimiser le rendement de la turbine, et de manière plus générale de la turbomachine.

Afin de maximiser les rendements, les motoristes cherchent donc continuellement à minimiser le passage de gaz entre la roue mobile et le bloc de matière abradable.

L'art antérieur comprend également les documents EP-A1-2746537, FR-A1-2970999, FR-A1-2955142 et DE-A1-102010017489.

L'objectif de la présente invention est donc d'apporter une solution simple, efficace et économique permettant de répondre à la problématique précitée.

### EXPOSÉ DE L'INVENTION

La présente invention propose une aube mobile pour une roue d'une turbomachine d'aéronef, ladite aube comportant une pale aérodynamique s'étendant suivant un axe d'empilement Z et un talon externe délimitant ladite pale suivant ledit axe d'empilement Z, ledit talon comportant une plateforme et une première léchette en saillie depuis ladite plateforme, la première léchette étant inclinée vers l'amont d'un angle aigu par rapport audit axe d'empilement Z, ladite première léchette s'étendant circonférentiellement suivant un axe d'allongement X, caractérisée en ce que le talon comprend une rangée de nervures distantes les unes des autres, ladite rangée comprenant au moins deux nervures, ladite rangée de nervures s'étendant selon ledit axe d'allongement X, chaque nervure s'étendant suivant ledit axe d'empilement Z depuis ladite plateforme jusqu'à ladite première léchette, chaque nervure étant disposée en amont de la première léchette suivant le sens d'écoulement des gaz autour de ladite pale de manière à générer des turbulences en amont de ladite première léchette.

Les nervures permettent de créer des turbulences aérodynamiques qui forment un rideau s'opposant au passage des gaz de l'amont vers l'aval, de manière à limiter le passage des gaz entre la roue mobile (respectivement l'aube mobile) et le bloc de matière abradable, et ainsi maximiser les rendements.

L'aube selon l'invention peut comprendre une ou plusieurs des caractéristiques ci-dessous, prises isolément les unes des autres ou en combinaison les unes avec les autres :
- au moins une des nervures est inclinée d'un angle aigu A par rapport audit axe d'allongement X, ledit angle aigu A étant défini depuis l'axe d'allongement X jusqu'à la nervure correspondante dans un sens trigonométrique, ledit angle aigu A étant mesuré dans un plan P perpendiculaire audit axe d'empilement Z ;
- ledit angle aigu A est supérieur ou égal à 30° et inférieur à 90° ;
- au moins une des nervures présente en section un profil en forme de parallélogramme, selon un plan de coupe perpendiculaire audit axe d'empilement Z et passant par la nervure correspondante ;
- chaque nervure présente deux parois latérales, planes et parallèles, lesdites parois latérales étant distantes l'une de l'autre d'une distance B, la distance B étant comprise entre 0.5 et 3 mm, ladite distance B étant mesurée dans un plan P perpendiculaire audit axe d'empilement Z ;
- ladite pale présente une face intrados et une face extrados opposées, chaque nervure présentant une paroi frontale plane, ladite première léchette présentant une surface externe délimitée par un bord aval droit et un bord latéral droit disposé du côté de la face extrados de la pale, la distance D entre ledit bord aval et ladite paroi frontale étant inférieure à la longueur E dudit bord latéral, la distance D et la longueur E étant mesurées dans un plan P perpendiculaire audit axe d'empilement Z ;
- la distance C suivant ledit axe d'allongement X entre deux nervures consécutives est comprise entre 2 et 5 mm, ladite distance C étant mesurée dans un plan P perpendiculaire audit axe d'empilement Z ;
- ledit talon comprend une seconde léchette distante de ladite première léchette et disposée en aval de ladite première léchette.

La présente invention concerne encore une roue mobile pour une turbomachine d'aéronef, comportant un disque portant à sa périphérie une rangée annulaire d'aubes telles que décrites précédemment.

La présente invention concerne également une turbomachine d'aéronef, comportant au moins une aube telle que décrite précédemment ou une roue telle que décrite précédemment.

### BRÈVE DESCRIPTION DES FIGURES

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
- la figure 1 est une vue de côté schématique de détail d'une d'aube mobile pour une roue mobile d'une turbomachine d'aéronef ;
- la figure 2 est une vue de détail en perspective de l'aube représentée sur la figure 1 ;
- la figure 3 est une vue de face en perspective de l'aube représentée sur les figures 1 et 2 ;
- la figure 4 est une vue de dessus de l'aube illustrée sur les figures 1 à 3, dans un plan P perpendiculaire à un axe d'empilement Z de l'aube, illustrant via une esquisse les paramètres dimensionnels des nervures.

### DESCRIPTION DETAILLÉE D'UN MODE DE RÉALISATION

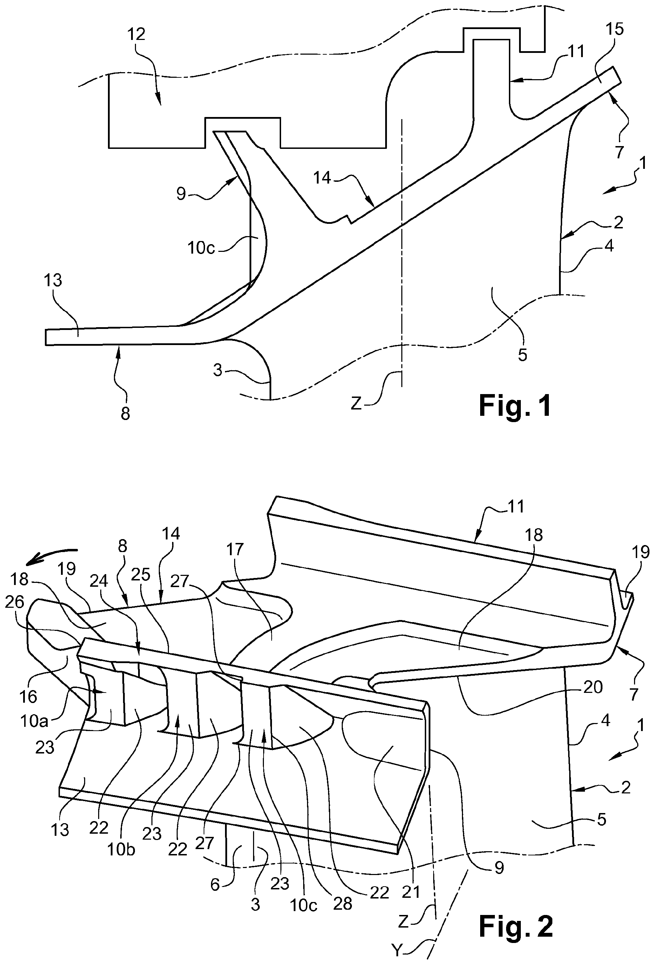

Sur les figures 1 à 4 est représentée une aube 1 mobile pour une roue mobile d'une turbomachine d'aéronef, et plus précisément pour une roue mobile d'une turbine basse pression de la turbomachine. L'aube 1 mobile pourrait être destinée à équiper une turbine haute pression de la turbomachine.

L'aube 1 comprend une pale 2 aérodynamique s'étendant suivant un axe d'empilement Z (ou axe d'empilage). La pale 2 présente un bord d'attaque 3 et un bord de fuite 4 opposé au bord d'attaque 3. La pale 2 présente en outre une face latérale intrados 5 et une face latérale extrados 6 opposée à la face latérale intrados 5, les faces intrados et extrados 5, 6 reliant le bord d'attaque 3 au bord de fuite 4. Dans un plan P perpendiculaire à l'axe d'empilement Z, la pale 2 est profilée suivant une ligne moyenne reliant le bord d'attaque 3 au bord de fuite 4, la ligne moyenne séparant l'aube 1 en un côté intrados et un côté extrados. Les faces intrados et extrados 5, 6 sont incurvées, et respectivement concave et convexe.

Dans la présente demande, les termes « intrados » et « extrados » associés aux différents éléments de l'aube 1 ont pour référence le côté intrados et le côté extrados.

Le bord d'attaque 3 est disposé en amont du bord de fuite 4, suivant le sens d'écoulement des gaz autour de la pale 2, et de manière générale suivant le sens d'écoulement des gaz dans la turbine.

Dans la présente demande, les termes « amont » et « aval » sont définis par rapport au sens de circulation des gaz autour de la pale 2 (et de manière plus générale dans la turbine).

L'aube 1 comprend en outre un talon 7 externe et un pied interne délimitant la pale 2 suivant l'axe d'empilement Z. Plus précisément, la pale 2 est délimitée par une plateforme interne du pied et une plateforme 8 externe du talon 7.

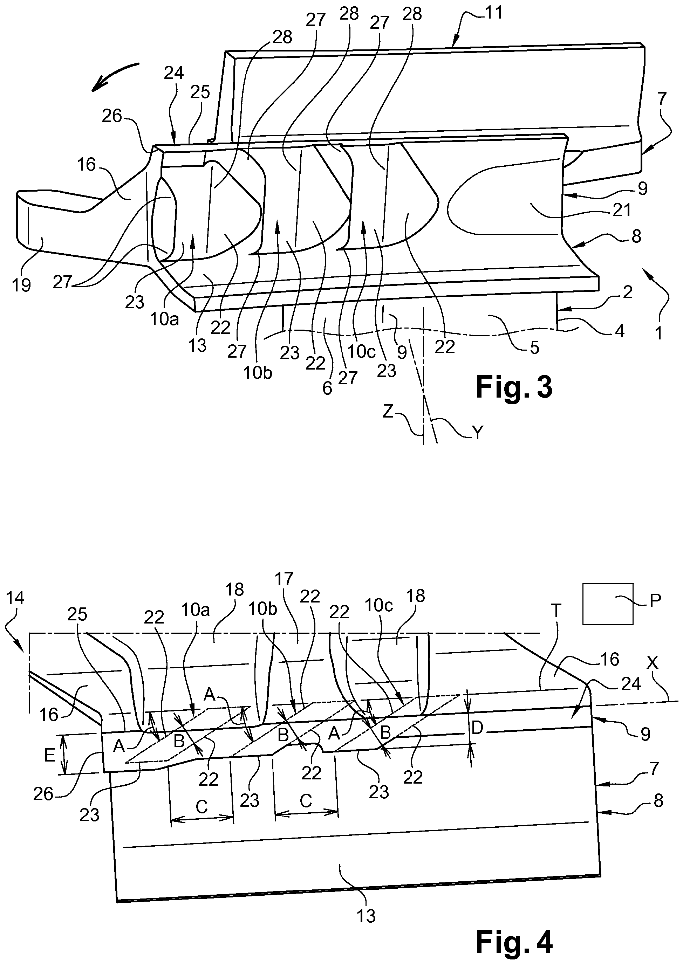

Une roue mobile comprend un disque portant à sa périphérie une rangée annulaire d'aubes 1. Plus précisément, chaque pied comporte un bulbe configuré pour être engagé dans une alvéole complémentaire pratiquée dans le disque. La roue (respectivement l'aube 1) est mobile autour d'un axe de rotation Y coaxial avec l'axe de la turbomachine. Tel qu'illustré par la flèche sur les figures 2 et 3, l'aube 1 est mobile en rotation autour de l'axe Y de l'intrados vers l'extrados, et autrement dit ici selon un sens de rotation trigonométrique (sens antihoraire).

Dans la présente demande, les termes « interne », « externe », « intérieur » ou « extérieur » sont définis par rapport à l'axe de rotation Y de l'aube 1 (et de manière plus générale de la roue mobile).

La talon 7 de l'aube 1 comprend en outre une première léchette 9 en saillie vers l'extérieur depuis la plateforme 8 externe. La première léchette 9 est inclinée vers l'amont d'un angle aigu par rapport à l'axe d'empilement Z. La première léchette 9 s'étend circonférentiellement suivant un axe d'allongement X. Le talon 7 comprend une rangée de nervures 10a-10c distantes les unes des autres. La rangée comprend au moins deux nervures 10a-10c. La rangée de nervures 10a-10c s'étend selon l'axe d'allongement X. Chaque nervure 10a-10c (ou languette) s'étend suivant l'axe d'empilement Z depuis la plateforme 8 externe jusqu'à la première léchette 9. Chaque nervure 10a-10c est disposée en amont de la première léchette 9 suivant le sens d'écoulement des gaz autour de la pale 2 de manière à générer des turbulences en amont de la première léchette 9.

Selon le mode de réalisation illustré sur les figures, le talon 7 de l'aube 1 comprend une première léchette 9 et une seconde léchette 11 distantes l'une de l'autre, la seconde léchette 11 étant disposée en aval de la première léchette 9. La première léchette 9 et la seconde léchette 11 sont ci-après respectivement dénommées léchette amont 9 et léchette aval 11. La léchette amont 9 est inclinée vers l'amont d'un angle de 30° par rapport à l'axe d'empilement Z, l'angle étant mesuré dans un plan qui est à la fois coïncident avec l'axe de rotation Y de l'aube 1 et l'axe d'empilement Z de l'aube 1. La léchette amont 9 pourrait être inclinée vers l'amont d'un angle aigu compris entre 25° et 35° par rapport à l'axe d'empilement Z. La léchette aval 11 s'étend suivant l'axe d'empilement Z depuis la plateforme 8 externe. La léchette aval 11 pourrait être inclinée vers l'amont d'un angle inférieur ou égal à 10° par rapport à l'axe d'empilement Z.

Le fait d'incliner les léchettes 9, 11 vers l'amont permet d'accroître les turbulences aérodynamiques, et ainsi de renforcer le rideau formé par ces turbulences qui s'opposent au passage des gaz de l'amont vers l'aval, de manière à limiter le passage de gaz entre la roue mobile (respectivement l'aube 1 mobile) et un bloc de matière abradable 12.

Selon le mode de réalisation illustré sur les figures, la plateforme 8 externe de l'aube 1 comprend, d'amont en aval, un becquet amont 13 s'étendant en amont de la léchette amont 9, une plateau 14 central s'étendant entre la léchette amont 9 et la léchette aval 11, et un becquet aval 15 s'étendant en aval de la léchette aval 11. Le talon 7 comprend en outre deux languettes de renfort 16 entre la léchette amont 9 et le plateau 14, ces languettes 16 étant disposées à chacune des extrémités de la léchette amont 9. Le plateau 14 comporte une nervure 17 centrée sur la ligne moyenne, la nervure 17 joignant la léchette amont 9 à la léchette aval 11. Le plateau 14 comprend en outre deux évidements 18 placés de part et d'autre de la nervure 17.

Les léchettes amont et aval 9, 11 sont destinées à coopérer par complémentarité de forme avec un bloc annulaire de matière abradable 12 (par exemple une structure en nid d'abeille) fixé sur un carter externe entourant la roue mobile, pour former un joint d'étanchéité de type labyrinthe.

Les plateformes externes des aubes 1 mobiles d'une même roue sont conformées pour s'emboîter les unes avec les autres de manière à délimiter extérieurement une portion de veine dans laquelle circule un flux de gaz. Les plateformes externes sont ainsi disposées flanc à flanc. Chaque plateforme 8 externe est délimitée latéralement par un flanc mâle 19 apte à s'introduire dans un flanc femelle 20 d'une aube adjacente et un flanc femelle 20 apte à recevoir un flanc mâle 19 d'une aube adjacente. Les flancs mâle et femelle 19, 20 sont respectivement disposés du côté extrados et du côté intrados.

La rangée comprend par exemple entre deux et cinq nervures.

Selon le mode de réalisation illustré sur les figures, la rangée comprend trois nervures 10a-10c dénommées respectivement, de l'extrados vers l'intrados, première nervure 10a, seconde nervure 10b et troisième nervure 10c. Ces trois nervures 10a-10c sont distantes les unes des autres. Les nervures 10a-10c sont positionnées suivant un pas constant à partir du flanc mâle 19 (côté extrados). La première nervure 10a est positionnée à proximité du flanc mâle 19. La troisième nervure 10c est éloignée du flanc femelle 20. Le talon 7 comprend une protubérance 21 entre la troisième nervure 10c et le flanc femelle 20.

La léchette amont 9 s'étend circonférentiellement suivant un axe d'allongement X. Avantageusement, au moins une des nervures 10a-10c est inclinée d'un angle aigu A par rapport à l'axe d'allongement X. L'angle aigu A est défini depuis l'axe d'allongement X jusqu'à la nervure 10a-10c correspondante dans un sens trigonométrique (ou sens antihoraire). L'angle aigu A est mesuré dans un plan P perpendiculaire à l'axe d'empilement Z. L'angle aigu A est supérieur ou égal à 30° et inférieur à 90°.

Selon le mode de réalisation illustré sur les figures et notamment la figure 4, chacune des trois nervures 10a-10c est inclinée d'un angle de 30° (A = 30°) par rapport à l'axe d'allongement X. La figure 4 est une vue de dessus sur laquelle les nervures 10a-10c sont esquissées en pointillés. Le trait de construction T représenté sur la figure 4 correspond à l'origine de la léchette amont 9.

Avantageusement, au moins une des nervures 10a-10c présente en section un profil en forme de parallélogramme, selon un plan de coupe perpendiculaire à l'axe d'empilement Z et passant par la nervure correspondante 10a-10c.

Selon le mode de réalisation illustré sur les figues et notamment la figure 4, chacune des trois nervures 10a-10c présente un profil en forme de parallélogramme.

Avantageusement, chacune des nervures 10a-10c présente deux parois latérales 22, planes et parallèles, les parois latérales 22 étant distantes l'une de l'autre d'une distance B. La distance B est comprise entre 0.5 et 3 mm. La distance B correspond à l'épaisseur de la nervure. La distance B est mesurée dans un plan P perpendiculaire à l'axe d'empilement Z.

Selon le mode de réalisation illustré sur les figures et notamment la figure 4, la distance B est identique pour les trois nervures 10a-10c et égale à 1 mm.

Avantageusement, chacune des nervures 10a-10c présente une paroi frontale 23 plane. La léchette amont 9 présente une surface externe 24 délimitée par un bord aval 25 droit et un bord latéral 26 droit disposé du côté extrados (ci-après nommé bord latéral extrados 26). La distance D entre le bord aval 25 et la paroi frontale 23 est inférieure à la longueur E du bord latéral extrados 26. La distance D et la longueur E sont mesurées dans un plan P perpendiculaire à l'axe d'empilement Z.

Selon le mode de réalisation illustré sur les figures et notamment la figure 4, la distance D est identique pour les trois nervures 10a-10c. La distance D est égale à 1.5 mm et la longueur E est égale à 2.5 mm. Chaque nervure 10a-10c présente, du côté extrados, un congé de raccordement 27 avec la léchette amont 9 et un congé de raccordement 27 avec la becquet amont 13. Chaque nervure 10a-10c présente un arrondi 28 entre la paroi frontale 23 et la paroi latérale 22 orientée du côté intrados.

Avantageusement, la distance C suivant l'axe d'allongement X entre deux nervures 10a-10c consécutives est comprise entre 2 et 5 mm. La distance C est mesurée dans un plan P perpendiculaire à l'axe d'empilement Z.

Selon le mode de réalisation illustré sur les figures et notamment la figure 4, la distance C est constante et égale à 3 mm.

Selon le mode de réalisation illustré sur les figures, les nervures 10a-10c présentent des caractéristiques dimensionnelles et géométriques identiques. Les caractéristiques dimensionnelles et géométriques de chacune des nervures pourraient être différentes. Les caractéristiques dimensionnelles et géométriques des nervures dépendent notamment de la limite prédéfinie aux contraintes thermomécaniques, de la limite prédéfinie de la masse de l'aube et de l'intégration de l'aube.

Afin de limiter davantage le passage de gaz entre la roue mobile (respectivement de l'aube 1 mobile) et le bloc de matière abradable 12, il est possible d'implanter au moins une nervure disposée en amont de la léchette aval 11. Une telle nervure s'étend suivant l'axe d'empilement Z depuis la plateau 14 jusqu'à la léchette aval 11. Une telle nervure est configurée pour générer des turbulences en amont de la léchette aval 11. Les caractéristiques techniques associées aux nervures 10a-10c de la léchette amont 9 sont transposables aux nervures de la léchette aval 11.

L'aube 1 est par exemple réalisée via un procédé comprenant premièrement l'obtention d'une aube brute de fonderie via un procédé de moulage en cire perdue, et deuxièmement diverses opérations d'usinage réalisées sur l'aube brute afin d'obtenir une aube 1 présentant des cotes définitives telles que détaillées sur le dessin de définition.

## Revendications

1. Aube (1) mobile pour une roue d'une turbomachine d'aéronef, ladite aube (1) comportant une pale (2) aérodynamique s'étendant suivant un axe d'empilement (Z) et un talon (7) externe délimitant ladite pale (2) suivant ledit axe d'empilement (Z), ledit talon (7) comportant une plateforme (8) et une première léchette (9) en saillie depuis ladite plateforme (8), la première léchette (9) étant inclinée vers l'amont d'un angle aigu par rapport audit axe d'empilement (Z), ladite première léchette (9) s'étendant circonférentiellement suivant un axe d'allongement (X), **caractérisée en ce que** le talon (7) comprend une rangée de nervures (10a-10c) distantes les unes des autres, ladite rangée comprenant au moins deux nervures (10a-10c), ladite rangée de nervures (10a-10c) s'étendant selon ledit axe d'allongement (X), chaque nervure (10a-10c) s'étendant suivant ledit axe d'empilement (Z) depuis ladite plateforme (8) jusqu'à ladite première léchette (9), chaque nervure (10a-10c) étant disposée en amont de la première léchette (9) suivant le sens d'écoulement des gaz autour de ladite pale (2) de manière à générer des turbulences en amont de ladite première léchette (9).

2. Aube (1) selon la revendication 1, **caractérisée en ce qu'**au moins une des nervures (10a-10c) est inclinée d'un angle aigu (A) par rapport audit axe d'allongement (X), ledit angle aigu (A) étant défini depuis l'axe d'allongement (X) jusqu'à la nervure (10a-10c) correspondante dans un sens trigonométrique, ledit angle aigu (A) étant mesuré dans un plan (P) perpendiculaire audit axe d'empilement (Z).

3. Aube (1) selon la revendication 2, **caractérisée en ce que** ledit angle aigu (A) est supérieur ou égal à 30° et inférieur à 90°.

4. Aube (1) selon l'une des revendications précédentes, **caractérisée en ce qu'**au moins une des nervures (10a-10c) présente en section un profil en forme de parallélogramme, selon un plan de coupe perpendiculaire audit axe d'empilement (Z) et passant par la nervure (10a-10c) correspondante.

5. Aube (1) selon l'une des revendications précédentes, **caractérisée en ce que** chaque nervure (10a-10c) présente deux parois latérales (22), planes et parallèles, lesdites parois latérales (22) étant distantes l'une de l'autre d'une distance (B), la distance (B) étant comprise entre 0.5 et 3 mm, ladite distance (B) étant mesurée dans un plan (P) perpendiculaire audit axe d'empilement (Z).

6. Aube (1) selon l'une des revendications précédentes, **caractérisée en ce que** ladite pale (2) présente une face intrados (5) et une face extrados (6) opposées, chaque nervure (10a-10c) présentant une paroi frontale (23) plane, ladite première léchette (9) présentant une surface externe (24) délimitée par un bord aval (25) droit et un bord latéral (26) droit disposé du côté de la face extrados (6) de la pale (2), la distance (D) entre ledit bord aval (25) et ladite paroi frontale (23) étant inférieure à la longueur (E) dudit bord latéral (26), la distance (D) et la longueur (E) étant mesurées dans un plan (P) perpendiculaire audit axe d'empilement (Z).

7. Aube (1) selon l'une des revendications précédentes, **caractérisée en ce que** la distance (C) suivant ledit axe d'allongement (X) entre deux nervures (10a-10c) consécutives est comprise entre 2 et 5 mm, ladite distance (C) étant mesurée dans un plan (P) perpendiculaire audit axe d'empilement (Z).

8. Aube (1) selon l'une des revendications précédentes, **caractérisée en ce que** ledit talon (7) comprend une seconde léchette (11) distante de ladite première léchette (9) et disposée en aval de ladite première léchette (9).

9. Roue mobile pour une turbomachine d'aéronef, comportant un disque portant à sa périphérie une rangée annulaire d'aubes (1) selon l'une des revendications précédentes.

10. Turbomachine d'aéronef comportant une aube (1) selon l'une des revendications 1 à 8 ou une roue selon la revendication 9.

## Patentansprüche

1. Bewegliche Schaufel (1) für einen Rotor einer Flugzeugturbomaschine, wobei die Schaufel (1) ein aerodynamisches Schaufelblatt (2), das sich einer Stapelachse (Z) folgend erstreckt, und einen äußeren Absatz (7), der das Schaufelblatt (2) der Stapelachse (Z) folgend begrenzt, umfasst, wobei der Absatz (7) eine Plattform (8) und eine erste Dichtungslippe (9), die von der Plattform (8) hervorsteht, umfasst, wobei die erste Dichtungslippe (9) in Bezug auf die Stapelachse (Z) zur stromaufwärtigen Seite in einem spitzen Winkel geneigt ist, wobei sich die erste Dichtungslippe (9) umlaufend einer Verlängerungsachse (X) folgend erstreckt, **dadurch gekennzeichnet, dass** der Absatz (7) eine Reihe von Rippen (10a-10c) umfasst, die voneinander beabstandet sind, wobei die Reihe mindestens zwei Rippen (10a-10c) umfasst, wobei sich die Reihe von Rippen (10a-10c) gemäß der Verlängerungsachse (X) erstreckt, wobei sich jede Rippe (10a-10c) ausgehend von der Plattform (8) bis zur ersten Dichtungslippe (9) der Stapelachse (Z) folgend erstreckt, wobei jede Rippe (10a-10c) derart stromaufwärts der ersten Dichtungslippe (9) der Gasströmungsrichtung folgend um das Schaufelblatt (2) herum angeordnet ist, dass sie stromaufwärts der ersten Dichtungslippe (9) Turbulenzen erzeugt.

2. Schaufel (1) nach Anspruch 1, **dadurch gekennzeichnet, dass** mindestens eine der Rippen (10a-10c) in Bezug auf die Verlängerungsachse (X) in einem spitzen Winkel (A) geneigt ist, wobei der spitze Winkel (A) ausgehend von der Verlängerungsachse (X) bis zur entsprechenden Rippe (10a-10c) in einer trigonometrischen Richtung definiert ist, wobei der spitze Winkel (A) in einer Ebene (P) senkrecht zur Stapelachse (Z) gemessen wird.

3. Schaufel (1) nach Anspruch 2, **dadurch gekennzeichnet, dass** der spitze Winkel (A) größer als oder gleich 30° und kleiner als 90° ist.

4. Schaufel (1) nach einem der vorstehenden Ansprüche, **dadurch gekennzeichnet, dass** mindestens eine der Rippen (10a-10c) im Querschnitt, gemäß einer senkrecht zur Stapelachse (Z) und durch die entsprechende Rippe (10a-10c) verlaufenden Schnittebene, ein Profil in Form eines Parallelogramms aufweist.

5. Schaufel (1) nach einem der vorstehenden Ansprüche, **dadurch gekennzeichnet, dass** jede Rippe (10a-10c) zwei Seitenwände (22) aufweist, die eben und parallel sind, wobei die Seitenwände (22) voneinander um einen Abstand (B) beabstandet sind, wobei der Abstand (B) zwischen 0,5 und 3 mm beträgt, wobei der Abstand (B) in einer Ebene (P) senkrecht zur Stapelachse (Z) gemessen wird.

6. Schaufel (1) nach einem der vorstehenden Ansprüche, **dadurch gekennzeichnet, dass** das Schaufelblatt (2) eine Druckseite (5) und eine Saugseite (6) aufweist, die sich gegenüberliegen, wobei jede Rippe (10a-10c) eine ebene Vorderseite (23) aufweist, wobei die erste Dichtungslippe (9) eine äußere Fläche (24) aufweist, die von einem geraden stromabwärtigen Rand (25) und einem geraden Seitenrand (26), der seitens der Saugseite (6) des Schaufelblatts (2) angeordnet ist, begrenzt wird, wobei der Abstand (D) zwischen dem stromabwärtigen Rand (25) und der Vorderseite (23) kleiner als die Länge (E) des Seitenrands (26) ist, wobei der Abstand (D) und die Länge (E) in einer Ebene (P) senkrecht zur Stapelachse (Z) gemessen werden.

7. Schaufel (1) nach einem der vorstehenden Ansprüche, **dadurch gekennzeichnet, dass** der Abstand (C) der Verlängerungsachse (X) folgend zwischen zwei aufeinanderfolgenden Rippen (10a-10c) zwischen 2 und 5 mm beträgt, wobei der Abstand (C) in einer Ebene (P) senkrecht zur Stapelachse (Z) gemessen wird.

8. Schaufel (1) nach einem der vorstehenden Ansprüche, **dadurch gekennzeichnet, dass** der Absatz (7) eine zweite Dichtungslippe (11) umfasst, die von der ersten Dichtungslippe (9) beabstandet ist und stromabwärts der ersten Dichtungslippe (9) angeordnet ist.

9. Beweglicher Rotor für eine Flugzeugturbomaschine, umfassend eine Scheibe, die an ihrem Umfang eine ringförmige Reihe von Schaufeln (1) nach einem der vorstehenden Ansprüche trägt.

10. Flugzeugturbomaschine, umfassend eine Schaufel (1) nach einem der Ansprüche 1 bis 8 oder einen Rotor nach Anspruch 9.

## Claims

1. A movable vane (1) for a wheel of an aircraft turbomachine, said vane (1) comprising an aerodynamic blade (2) extending along a stacking axis (Z) and an outer heel (7) delimiting said blade (2) along said stacking axis (Z), said heel (7) comprising a platform (8) and a first lip (9) protruding from said platform (8), the first lip (9) being inclined upstream at an acute angle to said stacking axis (Z), said first lip (9) extending circumferentially along an axis of elongation (X), **characterised in that** the heel (7) comprises a row of ribs (10a-10c) spaced from each other, said row comprising at least two ribs (10a-10c), said row of ribs (10a-10c) extending along said axis of elongation (X), each rib (10a-10c) extending along said stacking axis (Z) from said platform (8) to said first lip (9), each rib (10a-10c) being arranged upstream of the first lip (9) according to the direction of gas flow around said blade (2) so as to generate turbulence upstream of said first lip (9).

2. The vane (1) according to claim 1, **characterised in that** at least one of the ribs (10a-10c) is inclined at an acute angle (A) with respect to said axis of elongation (X), said acute angle (A) being defined from the axis of elongation (X) to the corresponding rib (10a-10c) in a trigonometric direction, said acute angle (A) being measured in a plane (P) perpendicular to said stacking axis (Z).

3. The vane (1) according to claim 2, **characterised in that** said acute angle (A) is greater than or equal to 30° and less than 90°.

4. The vane (1) according to one of the preceding claims, **characterised in that** at least one of the ribs (10a-10c) has a parallelogram-shaped profile cross-section, according to a cross-sectional plane perpendicular to said stacking axis (Z) and passing through the corresponding rib (10a-10c).

5. The vane (1) according to one of the preceding claims, **characterised in that** each rib (10a-10c) has two side walls (22), flat and parallel, said side walls (22) being spaced apart from each other by a distance (B), the distance (B) being between 0.5 and 3 mm, said distance (B) being measured in a plane (P) perpendicular to said stacking axis (Z).

6. The vane (1) according to one of the preceding claims, **characterised in that** said blade (2) has an opposite intrados face (5) and extrados face (6), each rib (10a-10c) having a flat front wall (23), said first lip (9) having an outer surface (24) delimited by a straight downstream edge (25) and a straight side edge (26) arranged on the side of the extrados face (6) of the blade (2), the distance (D) between said downstream edge (25) and said front wall (23) being less than the length (E) of said side edge (26), the distance (D) and the length (E) being measured in a plane (P) perpendicular to said stacking axis (Z).

7. The vane (1) according to one of the preceding claims, **characterised in that** the distance (C) along said axis of elongation (X) between two consecutive ribs (10a-10c) is between 2 and 5 mm, said distance (C) being measured in a plane (P) perpendicular to said stacking axis (Z).

8. The vane (1) according to one of the preceding claims, **characterised in that** said heel (7) comprises a second lip (11) spaced from said first lip (9) and arranged downstream of said first lip (9).

9. A moving wheel for an aircraft turbomachine, comprising a disc carrying on its periphery an annular row of vanes (1) according to one of the preceding claims.

10. An aircraft turbomachine comprising a vane (1) according to any of claims 1 to 8 or a wheel according to claim 9.
